# EUROPÄISCHE PATENTANMELDUNG

(11) **EP 4 789 929 A1**
(43) Veröffentlichungstag der Anmeldung: **12.08.2026**
(21) Anmeldenummer: 26154358.1
(22) Anmeldetag: 27.01.2026
(51) Int. Cl.: B60S 1/52, B60S 1/34, B60S 1/40

(54) **FAHRZEUG MIT EINEM SCHEIBENWISCHER SOWIE EIN SCHEIBENWISCHER**

(30) Priorität: 08.02.2025 DE 102025000486
(71) Anmelder: MAN Truck & Bus SE, 80995 München (DE)
(72) Erfinder: Schmitz, Andreas, 80995 München (DE)

(57) **Zusammenfassung**

Die Erfindung betrifft ein Fahrzeug mit einem Scheibenwischer (5; 7), wobei der Scheibenwischer eine Wischerstange (21) und ein Wischerblatt (23) aufweist, und wobei das Wischerblatt (23) an der Wischerstange (21) befestigt ist. Erfindungsgemäß ist vorgesehen, dass sich das Wischerblatt (23), bei in Ruheposition befindlichem Scheibenwischer (5; 7) nach fahrzeugoben über die Wischerstange (21) hinaus erstreckt.

## Beschreibung

Die Erfindung betrifft ein Fahrzeug mit einem Scheibenwischer nach dem Oberbegriff des Anspruches 1 sowie gemäß dem Anspruch 10 einen Scheibenwischer.

Aus der DE 33 23 004 A1 ist ein Fahrzeug mit einem Scheibenwischer bekannt. Der Scheibenwischer weist eine Wischerstange und ein Antriebsteil auf, die gelenkig miteinander verbunden sind. Das Antriebsteil ist mit einem Scheibenwischerantrieb des Fahrzeuges drehmomentübertragend verbunden. Der Scheibenwischer weist ferner ein Wischerblatt auf, das an einem Befestigungsabschnitt der Wischerstange befestigt ist.

Die Wischerstange begrenzt einen Stangendurchlass für ein Spülmedium nach außen. An der Wischerstange sind Sprühdüsen des Scheibenwischers angeordnet, die von der Wischerstange in Richtung des Wischerblattes abragen. Jede der Sprühdüsen begrenzt einen Düsendurchlass nach außen, der mit dem Stangendurchlass in Strömungsverbindung steht und in Richtung des Wischerblattes offen ist.

Die Wischerstange ist derart relativ zu dem Wischerblatt angeordnet, dass, bei an einem Fahrzeug montiertem Scheibenwischer, der Wischerarm, mit Blickrichtung nach fahrzeugvorne und rechtwinklig auf die Wischerstange, fluchtend hinter dem Wischerblatt angeordnet ist. In der Ruheposition des Scheibenwischers, bei der sich der Scheibenwischer im Wesentlichen parallel zur Fahrzeugquerachse des Fahrzeuges erstreckt, ragen die Wischerstange und die Sprühdüsen nach fahrzeugvorne in das Fahrersichtfeld ein. Das Fahrzeug hat daher den Nachteil eines eingeschränkten Fahrersichtfeldes.

Aus der US 5 291 627 ist eine Scheibenwischer-Baugruppe mit einem Flüssigkeitsdurchlass bekannt. Die DE 10 2022 200 473 A1 offenbart eine Wischervorrichtung, ein Wischblatt und eine Wischarmeinheit.

Eine Aufgabe der Erfindung besteht darin, ein Fahrzeug mit vergrößertem Fahrersichtfeld bereitzustellen.

Diese Aufgabe ist durch die Merkmale der unabhängigen Ansprüche gelöst. Bevorzugte Weiterbildungen der Erfindung sind in den Unteransprüchen offenbart.

Erfindungsgemäß vorgeschlagen ist ein Fahrzeug mit einem Scheibenwischer, wobei der Scheibenwischer eine Wischerstange und ein Wischerblatt aufweist, und wobei das Wischerblatt an der Wischerstange befestigt ist. Erfindungsgemäß ist vorgesehen, dass sich das Wischerblatt, bei in Ruheposition befindlichem Scheibenwischer, bevorzugt über die gesamte Länge des Wischerblattes, nach fahrzeugoben über die Wischerstange hinaus erstreckt. Die Wischerstange ragt daher, bei in Ruheposition befindlichem Scheibenwischer, nicht nach fahrzeugoben über das Wischerblatt hinaus, so dass die Wischerstange, bei in der Ruheposition befindlichem Scheibenwischer, nicht in das Fahrersichtfeld einragt. Die Wischerstange stellt somit keine Einschränkung des Fahrersichtfeldes dar. Das Fahrzeug hat somit den Vorteil, dass das Fahrersichtfeld, bei in der Ruheposition befindlichem Scheibenwischer, gegenüber dem Stand der Technik vergrößert ist.

Um auch zu verhindern, dass sich auch weitere Bauteile des Scheibenwischers, bei in der Ruheposition befindlichem Scheibenwischer, nicht in das Fahrersichtfeld erstrecken, ist bei einer beispielhaften Ausführungsform vorgesehen, dass der Scheibenwischer Sprühdüsen, bevorzugt zum Besprühen einer Frontscheibe des Fahrzeuges mit Scheibenwaschflüssigkeit, aufweist, wobei vorgesehen ist, dass die Sprühdüsen derart an der Wischerstange befestigt und/oder derart dimensioniert sind, dass sich das Wischerblatt, bei in Ruheposition befindlichem Scheibenwischer, bevorzugt über die gesamte Länge des Wischerblattes, nach fahrzeugoben über die Sprühdüsen hinaus erstreckt, oder wobei vorgesehen ist, dass die Sprühdüsen derart an der Wischerstange befestigt und/oder derart dimensioniert sind, dass die Sprühdüsen, bei in Ruheposition befindlichem Scheibenwischer, nach fahrzeugoben bündig mit dem Wischerblatt abschließen.

Damit das Wischerblatt die Wischerstange nach fahrzeugoben überragen kann, ist bei einer bevorzugten Ausführungsform vorgesehen, dass der Scheibenwischer ein Verbindungsteil aufweist, und dass das Wischerblatt über das Verbindungsteil an einem Befestigungsabschnitt der Wischerstange befestigt ist.

Um den Scheibenwischer in seiner Gesamtheit und in Bezug auf die Fahrzeughochachse möglichst kompakt bauen zu können, ist bei einer exemplarischen Ausführungsform vorgesehen, dass sich, bei in der Ruheposition befindlichem Scheibenwischer, eine Wischerblattaufnahme des Verbindungsteils, über die das Wischerblatt an dem Verbindungsteil befestigt ist, fahrzeugoberhalb der Wischerstange erstreckt.

Um ein Besprühen einer Frontscheibe des Fahrzeuges möglichst effektiv zu ermöglichen, ist bei einer beispielhaften Ausführungsform vorgesehen, dass sich der Befestigungsabschnitt zwischen einem Basisabschnitt und einem Verlängerungsabschnitt der Wischerstange erstreckt, und dass eine erste Sprühdüse der Sprühdüsen an dem Basisabschnitt und eine zweite Sprühdüse der Sprühdüsen an dem Verlängerungsabschnitt befestigt ist.

Um mit jeder der Sprühdüsen einen möglichst großen Bereich der Frontscheibe des Fahrzeugen besprühen zu können, ist bei einer bevorzugten Ausführungsform vorgesehen, dass jede der Sprühdüsen einen ersten Düsendurchlass mit einem ersten Düsenauslass und einen zweiten Düsendurchlass mit einem zweiten Düsenauslass aufweist, wobei vorgesehen ist, dass der erste Düsenauslass und der zweite Düsenauslass auf eine Frontscheibe des Fahrzeuges gerichtet sind.

Um mit jeder der Sprühdüsen einen möglichst großen Bereich der Frontscheibe des Fahrzeuges entlang des Wischerblattes besprühen zu können, ist bei einer bevorzugten Ausführungsform vorgesehen, dass der erste Düsenauslass und der zweite Düsenauslass einer jeden Sprühdüse, in Bezug auf die Fahrzeugquerachse des Fahrzeuges, auf gegenüberliegende Bereiche der Frontscheibe gerichtet sind.

Um dem Wischerblatt möglichst wenig Angriffsfläche für Luftströme, insbesondere den Fahrtwind, zu geben, die die Wischleistung des Wischerblattes negativ beeinflussen können, ist bei einer exemplarischen Ausführungsform vorgesehen, dass das Wischerblatt durch einen, bevorzugt bügellosen, Flachbalkenwischer gebildet ist.

Um die erste Sprühdüse und die zweite Sprühdüse zuverlässig mit Scheibenwaschflüssigkeit versorgen zu können und um den Scheibenwischer kostengünstig herstellen zu können, ist bei einer bevorzugten Ausführungsform vorgesehen, dass die erste Sprühdüse, bevorzugt der erste Düsendurchlass der ersten Sprühdüse und/oder der zweite Düsendurchlass der ersten Sprühdüse, über eine erste Versorgungsleitung, bevorzugt einen ersten Schlauch, in Strömungsverbindung mit einer Pumpe für Scheibenwaschflüssigkeit des Fahrzeuges steht, und/oder dass die zweite Sprühdüse, bevorzugt der erste Düsendurchlass der zweiten Sprühdüse und/oder der zweite Düsendurchlass der zweiten Sprühdüse, über eine zweite Versorgungsleitung, bevorzugt einen zweiten Schlauch, in Strömungsverbindung mit einer Pumpe für Scheibenwaschflüssigkeit des Fahrzeuges steht.

Bevorzugt ist vorgesehen, dass sich die erste Versorgungsleitung, bei in Ruheposition befindlichem Scheibenwischer, in dem Bereich zwischen der ersten Sprühdüse und dem Verbindungsteil oberhalb der Wischerstange erstreckt, und/oder dass sich die zweite Versorgungsleitung, bei in Ruheposition befindlichem Scheibenwischer, in dem Bereich zwischen der zweiten Sprühdüse und dem Verbindungsteil oberhalb der Wischerstange erstreckt.

Erfindungsgemäß vorgeschlagen ist ferner ein Scheibenwischer, bevorzugt der wie vorbeschriebene Scheibenwischer oder der Scheibenwischer des wie vorbeschriebenen Fahrzeuges, mit einer oder der Wischerstange, und einem oder dem Wischerblatt, wobei das Wischerblatt an der Wischerstange befestigt ist, wobei das Wischerblatt, mit Blickrichtung in positiver Hochachsenrichtung der Wischerstange, hinter der Wischerstange angeordnet ist.

Exemplarisch ist vorgesehen, dass das Wischerblatt und/oder eine erste Sprühdüse des Scheibenwischers und/oder eine zweite Sprühdüse des Scheibenwischers in positiver Hochachsenrichtung der Wischerstange nicht über das Wischerblatt hinausragen oder dass das Wischerblatt und/oder eine erste Sprühdüse des Scheibenwischers und/oder eine zweite Sprühdüse des Scheibenwischers in positiver Hochachsenrichtung bündig mit dem Wischerblatt abschließen.

Bevorzugt ist vorgesehen, dass der Scheibenwischer ein Verbindungsteil aufweist, und dass das Wischerblatt über das Verbindungsteil mit der Wischerstange verbunden ist. Besonders bevorzugt ist vorgesehen, dass das Verbindungsteil, mit Blickrichtung in positiver Hochachsenrichtung der Wischerstange, im Wesentlichen und/oder großteils hinter der Wischerstange angeordnet ist.

Beispielhaft ist vorgesehen, dass eine Hochachse der Wischerstange, eine Querachse der Wischerstange und eine Längsachse der Wischerstange ein kartesisches Wischerstangen-Koordinatensystem aufspannen. Bei an dem Fahrzeug montiertem Scheibenwischer und bei in der Ruheposition befindlichem Scheibenwischer erstreckt sich die Hochachse der Wischerstange parallel zu der Fahrzeughochachse des Fahrzeuges und erstreckt sich die Längsachse der Wischerstange parallel zu der Fahrzeugquerachse des Fahrzeuges und erstreckt sich die Querachse der Wischerstange parallel zu der Fahrzeuglängsachse des Fahrzeuges.

Beispielhaft ist vorgesehen, dass der Scheibenwischer derart an dem Fahrzeug befestigt ist, dass sich der Scheibenwischer, bevorzugt in seiner Gesamtheit, bei in der Ruheposition befindlichem Scheibenwischer, außerhalb, bevorzugt unterhalb, des Fahrersichtfeldes erstreckt.

Das Fahrersichtfeld kann durch das rechtlich vorgeschriebene Fahrersichtfeld des Fahrers des Fahrzeuges oder durch das maximal mögliche Fahrersichtfeld des Fahrers des Fahrzeuges, welches durch eine Frontscheibe des Fahrzeuges und unter Berücksichtigung des Interieurs des Fahrzeuges, wie einer Instrumententafel und/oder einer Sensormoduls an einer Oberkante der Frontscheibe, vom Fahrer einsehbar ist.

Die Ruheposition des Scheibenwischer kann dadurch definiert sein, dass sich die Wischerstange des Scheibenwischers, in der Ruheposition des Scheibenwischers, im Wesentlichen parallel zu der Fahrzeugquerachse des Fahrzeuges erstreckt.

Beispielhaft ist vorgesehen, dass das Fahrzeug eine, zwei oder mehrere des wie vorbeschriebenen Scheibenwischers aufweist. Die Scheibenwischer können, mit Blickrichtung entlang der Fahrzeuglängsachse des Fahrzeuges nebeneinander angeordnet sein.

Bevorzugt ist vorgesehen, dass das Fahrzeug durch ein Nutzfahrzeug, bevorzugt durch einen LKW, besonders bevorzugt durch einen LKW mit Frontlenkerfahrerhaus, gebildet ist. Selbstverständlich ist der Scheibenwischer auch bei anderen Fahrzeugen, wie beispielsweise einem PKW, anwendbar.

Bevorzugt ist vorgesehen, dass Angaben wie "unterhalb" oder "unter" oder "oberhalb" oder "über" in Bezug auf die Schwerkraftrichtung zu verstehen sind, und/oder dass sich Richtungsangaben auf das kartesische Fahrzeugkoordinatensystem aufweisend eine Fahrzeuglängsachse, eine Fahrzeugquerachse und eine Fahrzeughochachse beziehen, wobei die positive Fahrzeuglängsachsenrichtung nach fahrzeugvorne und/oder die positive Fahrzeugquerachsenrichtung nach fahrzeuglinks und/oder die positive Fahrzeughochachsenrichtung nach fahrzeugoben zeigt.

Nachfolgend sind Ausführungsformen der Erfindung anhand der beigefügten Figuren beschrieben.

Es zeigen:
- Figur 1: in einer Ansicht von vorne einen LKW mit Frontlenkerfahrerhaus mit einem Scheibenwischer;
- Figur 2: in einer Seitenansicht den LKW;
- Figur 3: in einer perspektivischen Ansicht einen Ausschnitt des Scheibenwischers;
- Figur 4: in einer Querschnittsansicht den Scheibenwischer;
- Figur 5: in einer rein schematischen Ansicht Benetzungsflächen von Sprühdüsen des Scheibenwischers, und
- Figuren 6 bis 8: jeweils in einer perspektivischen Ansicht den Scheibenwischer.

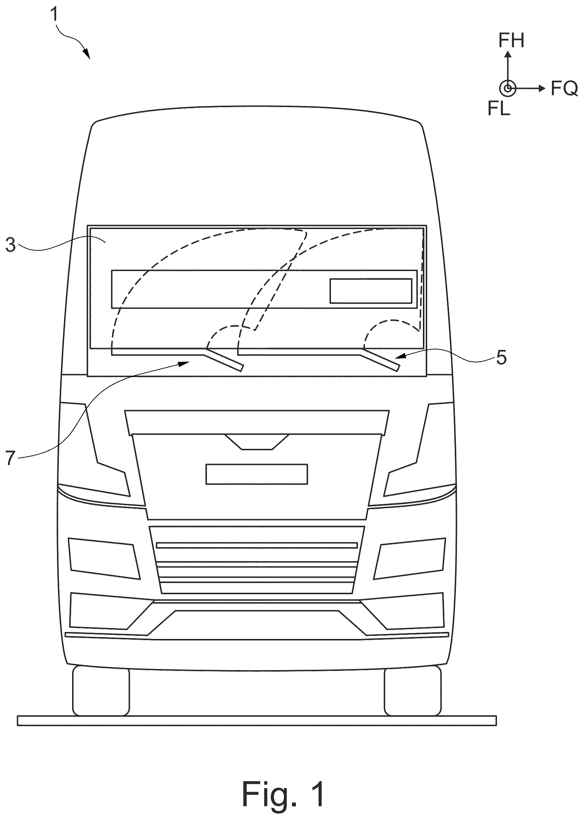

In der Figur 1 ist ein, beispielhaft durch einen LKW mit Frontlenkerfahrerhaus gebildetes, Fahrzeug 1 gezeigt. Das Fahrzeug 1 weist eine Frontscheibe 3 sowie zwei baugleiche Scheibenwischer 5 und 7 auf. Der Scheibenwischer 5 ist fahrzeuglinksseitig angeordnet. Der Scheibenwischer 7 ist fahrzeugrechtsseitig angeordnet.

Gemäß einem kartesischen Fahrzeugkoordinatensystem des Fahrzeuges 1 sind dem Fahrzeug 1 eine Fahrzeughochachse FH, eine Fahrzeugquerachse FQ und eine Fahrzeuglängsachse FH zugeordnet. Die positive Fahrzeughochachsenrichtung, die positive Fahrzeugquerachsenrichtung und die positive Fahrzeughochachsenrichtung sind in der Figur 1 jeweils anhand der an der Fahrzeughochachse FH, der Fahrzeugquerachse FQ und der Fahrzeuglängsachse FH dargestellten Pfeile veranschaulicht. Die positive Fahrzeuglängsachsenrichtung FL zeigt nach fahrzeugvorne. Die positive Fahrzeughochachsenrichtung zeigt nach fahrzeugoben. Die positive Fahrzeugquerachsenrichtung zeigt in Richtung der linken Fahrzeugseite.

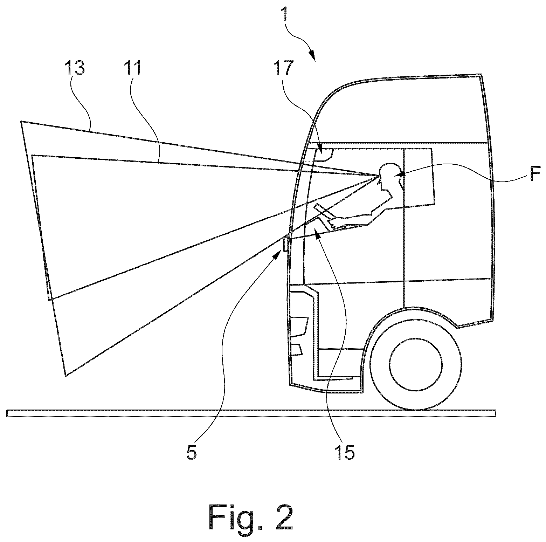

In der Figur 2 ist das Fahrzeug 1 in der Seitenansicht von links gezeigt. Anhand eines Dreiecks 11 ist das rechtlich vorgeschriebenen Fahrersichtfeld des Fahrers F des Fahrzeuges 1 veranschaulicht. Anhand eines Dreiecks 13 ist das maximal mögliche Fahrersichtfeld des Fahrers F des Fahrzeuges 1 durch die Frontscheibe 3 des Fahrzeuges 1 veranschaulicht. Das maximal mögliche Fahrersichtfeld ist der Bereich, der unter Berücksichtigung des Interieurs des Fahrzeuges 1, wie einer Instrumententafel 15 und einem Sensormodul 17 an einer Oberkante der Frontscheibe 3, vom Fahrer F des Fahrzeuges 1 einsehbar ist. Wie dies aus der Figur 2 ersichtlich ist, ist der Scheibenwischer 5 großteils unterhalb der Frontscheibe 3 angeordnet. Gleiches gilt auch für den Scheibenwischer 7, der ebenfalls großteils unterhalb der Frontscheibe 3 angeordnet ist.

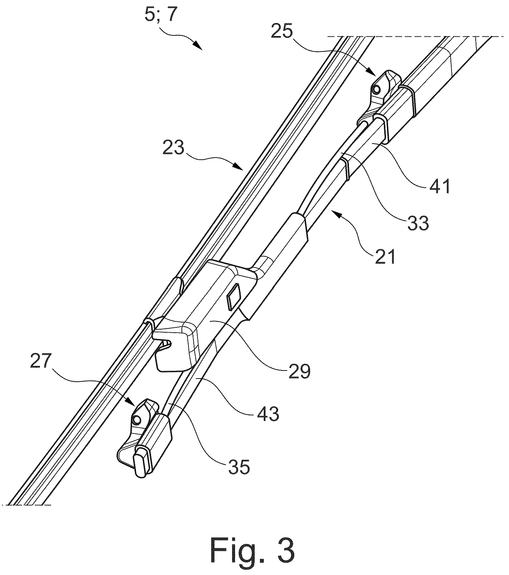

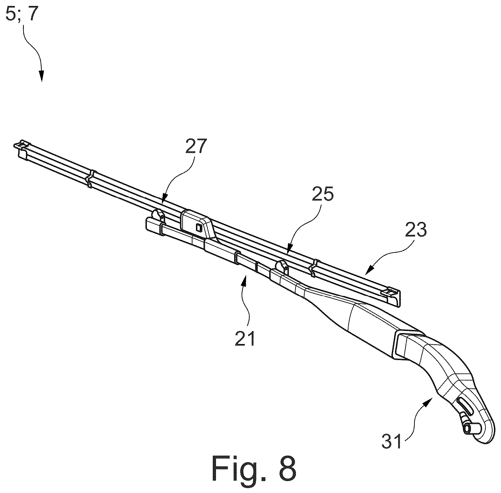

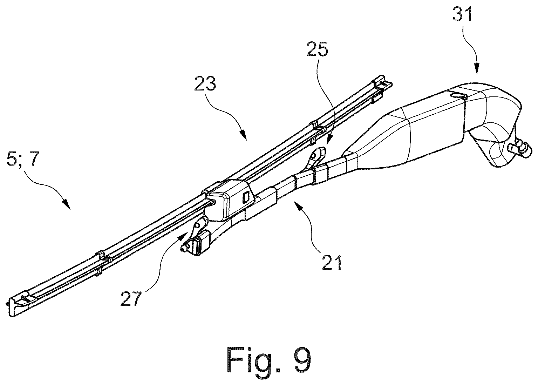

Anhand der Figuren 3 bis 9 ist der Scheibenwischer 5 beschrieben. Sofern nicht explizit etwas anderes angegeben ist, gelten die Angaben zum Scheibenwischer 5, insbesondere zum Aufbau des Scheibenwischers 5, auch für den Scheibenwischer 7. Aufgrund dessen, dass die Scheibenwischer 5 und 7 baugleich sind, sind in den Figuren 3 bis 9 zur erneuten Verdeutlichung der Baugleichheit jeweils beide Bezugszeichen, das heißt die Bezugszeichen 5 und 7, zur Kennzeichnung des in den Figuren 3 bis 9 dargestellten Scheibenwischers 5 aufgeführt.

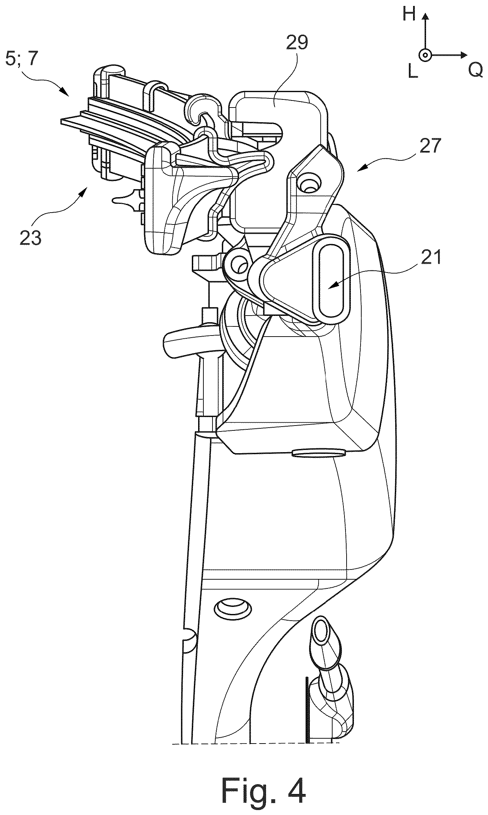

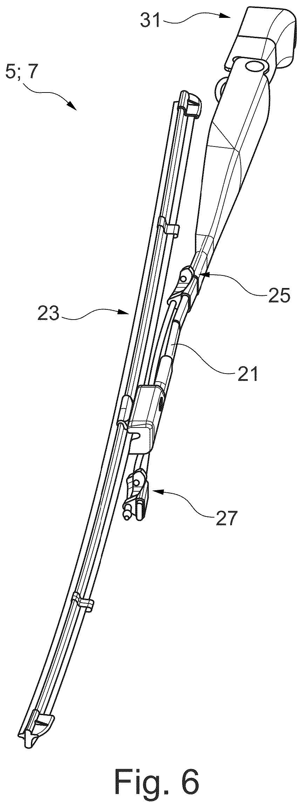

Wies dies in den Figuren 4 bis 9 und insbesondere der Figur 3 ersichtlich ist, weist der Scheibenwischer 5 eine Wischerstange 21, ein, hier lediglich beispielhaft durch einen, bevorzugt bügellosen, Flachbalkenwischer gebildetes, Wischerblatt 23, eine erste Sprühdüse 25, eine zweite Sprühdüse 27, ein Verbindungsteil 29 und ein, in der Figur 6 gezeigtes, Antriebsteil 31 auf. Ferner weist der Scheibenwischer 5 eine erste, hier beispielhaft durch einen ersten Schlauch gebildete, Versorgungsleitung 33 und eine zweite, hier beispielhaft durch einen zweiten Schlauch gebildete, Versorgungsleitung 35 auf.

Die Wischerstange 21 weist einen Basisabschnitt 41, einen Befestigungsabschnitt und einen Verlängerungsabschnitt 43 auf, die materialeinheitlich und/oder einstückig miteinander verbunden sind. Der Basisabschnitt 41 erstreckt sich zwischen dem Antriebsteil 31 und dem Befestigungsabschnitt. Der Befestigungsabschnitt ist zwischen dem Basisabschnitt 41 und dem Verlängerungsabschnitt 43 angeordnet. Die Wischerstange 21, konkret der Basisabschnitt 41, ist gelenkig mit dem Antriebsteil 31 verbunden, wie dies in der Figur 6 gezeigt ist. Mittels des Antriebsteils 31 ist der Scheibenwischer 5 drehmomentübertragend mit einem Scheibenwischerantrieb (nicht dargestellt) des Fahrzeuges 1 verbunden.

Das Verbindungsteil 29 ist an dem Befestigungsabschnitt der Wischerstange 21 befestigt. Das Wischerblatt 23 ist an einer Wischerblattaufnahme des Verbindungsteils 29 befestigt. Die Wischerblattaufnahme ist so gestaltet, dass das Wischerblatt 23 werkzeuglos vom Verbindungsteil 29 demontierbar und werkzeuglos an dem Verbindungsteil 29 montierbar ist.

Die erste Sprühdüse 25 ist an dem Basisabschnitt 41 befestigt und dient dazu, die Frontscheibe 3 im Bedarfsfall mit Scheibenwaschflüssigkeit zu besprühen. Die erste Sprühdüse 25 weist einen ersten Düsendurchlass mit einem ersten Düsenauslass und einen zweiten Düsendurchlass mit einem zweiten Düsenauslass auf. Der erste Düsenauslass der ersten Sprühdüse 25 und der zweite Düsenauslass der ersten Sprühdüse 25 sind jeweils auf eine Frontscheibe 3 des Fahrzeuges 1 gerichtet. Der erste Düsendurchlass der ersten Sprühdüse 25 und der zweite Düsendurchlass der ersten Sprühdüse 25 stehen über die erste Versorgungsleitung 33 in Strömungsverbindung mit einer, nicht explizit dargestellten, Pumpe für Scheibenwaschflüssigkeit des Fahrzeuges 1.

Die zweite Sprühdüse 27 ist an dem Verlängerungsabschnitt 43 befestigt und dient dazu, die Frontscheibe 3 im Bedarfsfall mit Scheibenwaschflüssigkeit zu besprühen. Die zweite Sprühdüse 27 weist einen ersten Düsendurchlass mit einem ersten Düsenauslass und einen zweiten Düsendurchlass mit einem zweiten Düsenauslass auf. Der erste Düsenauslass der zweiten Sprühdüse 27 und der zweite Düsenauslass der zweiten Sprühdüse 27 sind jeweils auf eine Frontscheibe 3 des Fahrzeuges 1 gerichtet. Der erste Düsendurchlass der zweiten Sprühdüse 27 und der zweite Düsendurchlass der zweiten Sprühdüse 27 stehen über die zweite Versorgungsleitung 35 in Strömungsverbindung mit der, nicht explizit dargestellten, Pumpe für Scheibenwaschflüssigkeit des Fahrzeuges 1.

Die relative Anordnung der Teile des Scheibenwischers 5 untereinander und des Scheibenwischers 5 relativ zu dem Fahrzeug 1 ist nachstehend erläutert. In der Figur 1 sind die Scheibenwischer 5 und 7 und in der Figur 2 ist der Scheibenwischer 5 jeweils in Ruheposition gezeigt. In der Ruheposition erstreckt sich die Wischerstange 21 zumindest im Bereich des Befestigungsabschnittes im Wesentlichen parallel zu der Fahrzeugquerachse FQ. Die Ruheposition des Scheibenwischers 5 entspricht auch dem fahrzeugunteren Umkehrpunkt des Scheibenwischers 5, sofern dieser vom Scheibenwischerantrieb des Fahrzeuges 1 angetrieben ist.

Wie dies in der Figur 4 gezeigt ist, erstreckt sich das Wischerblatt 23, bei in der Ruheposition befindlichem Scheibenwischer 5, und zwar über die gesamte Länge des Wischerblattes 23, nach fahrzeugoben und/oder in positiver Fahrzeughochachsenrichtung über die Wischerstange 21 hinaus. In der Figur 4 ist ebenfalls gezeigt, dass sich, bei in der Ruheposition befindlichem Scheibenwischer 5, die Wischerblattaufnahme des Verbindungsteils 29, über die das Wischerblatt 23 an dem Verbindungsteil 29 befestigt ist, oberhalb der Wischerstange 21 erstreckt. So ragt die Wischerstange 21 in der Ruheposition des Scheibenwischers 5 nicht in das Fahrersichtfeld ein.

In Bezug auf ein kartesisches Wischerstangen-Koordinatensystem der Wischerstange 21, welches Koordinatensystem eine Hochachse H der Wischerstange 21, eine Querachse Q der Wischerstange 21 und eine Längsachse L der Wischerstange 21 aufweist, ist das Wischerblatt 21, mit Blickrichtung in positiver Hochachsenrichtung der Wischerstange 21, hinter der Wischerstange 21 angeordnet und die Wischerblattaufnahme des Verbindungsteils 29, über die das Wischerblatt 23 an dem Verbindungsteil 29 befestigt ist, erstreckt sich, mit Blickrichtung in positiver Hochachsenrichtung der Wischerstange 21, hinter der Wischerstange 21. Die positive Hochachsenrichtung der Wischerstange 21, die positive Querachsenrichtung der Wischerstange 21 und die positive Längsachsenrichtung der Wischerstange 21 sind in der Figur 1 jeweils anhand der an der Hochachse der Wischerstange 21, der Querachse der Wischerstange 21 und der Längsachse der Wischerstange 21 dargestellten Pfeile veranschaulicht.

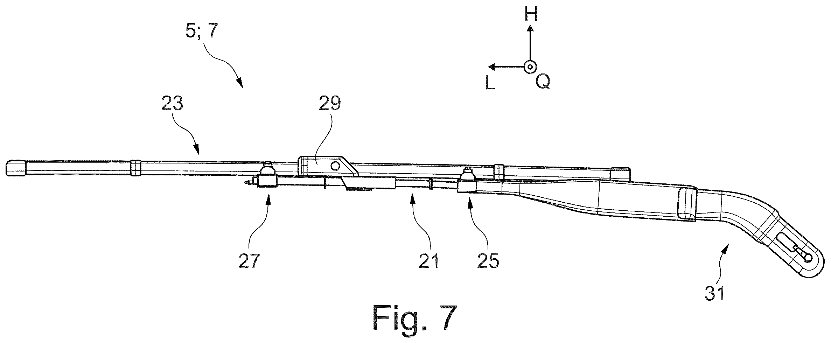

Insbesondere in der Figur 7 ist gezeigt, dass die erste Sprühdüse 25 und die zweite Sprühdüse 27 derart an der Wischerstange 21 befestigt sind und/oder die erste Sprühdüse 25 und die zweite Sprühdüse 27 derart dimensioniert sind, dass sich das Wischerblatt 21, bei in Ruheposition befindlichem Scheibenwischer 5 und in Bezug auf das Fahrzeugkoordinatensystem, über die gesamte Länge des Wischerblattes 21, nach fahrzeugoben und/oder in positiver Fahrzeughochachsenrichtung über die Sprühdüsen 25 und 27 hinaus erstreckt. So ragen auch die Sprühdüsen 25 und 27, in der Ruheposition des Scheibenwischers 5, nicht in das Fahrersichtfeld ein. Selbstverständlich ist es bei dieser oder einer anderen Ausführungsform des Fahrzeuges 1 auch möglich, dass die Sprühdüsen 25 und 27 derart an der Wischerstange 21 befestigt sind und/oder derart dimensioniert sind, dass die Sprühdüsen 25 und 27, bei in Ruheposition befindlichem Scheibenwischer 5, nach fahrzeugoben und/oder in positiver Fahrzeughochachsenrichtung bündig mit dem Wischerblatt 23 abschließen.

In Bezug auf das Wischerstangen-Koordinatensystem sind die erste Sprühdüse 25 und die zweite Sprühdüse 27 derart an der Wischerstange 21 befestigt und/oder derart dimensioniert, dass das Wischerblatt 23 und/oder die erste Sprühdüse 25 des Scheibenwischers 5 und/oder die zweite Sprühdüse 27 des Scheibenwischers 5 in positiver Hochachsenrichtung der Wischerstange 21 nicht über das Wischerblatt 23 hinausragen, oder dass das Wischerblatt 23 und/oder die erste Sprühdüse 25 des Scheibenwischers 5 und/oder die zweite Sprühdüse 27 des Scheibenwischers 5 in positiver Hochachsenrichtung der Wischerstange 21 bündig mit dem Wischerblatt 23 abschließen.

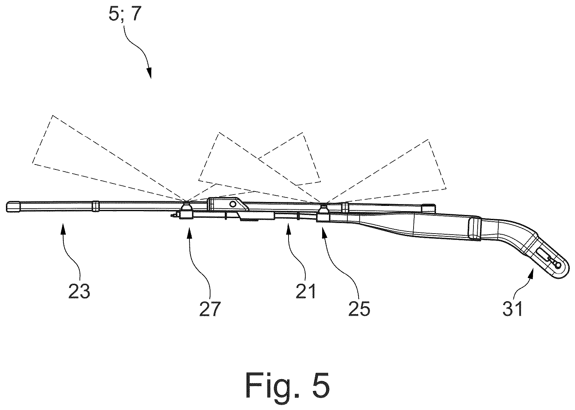

Wie dies beispielsweise in der Figur 5 gezeigt ist, sind der erste Düsenauslass und der zweite Düsenauslass der ersten Sprühdüse 25, bei in der Ruheposition befindlichem Scheibenwischer 5 und in Bezug auf die Fahrzeugquerachse des Fahrzeuges 1, auf gegenüberliegende Bereiche der Frontscheibe 3 gerichtet. Entsprechendes gilt für die zweite Sprühdüse 27: Der erste Düsenauslass und der zweite Düsenauslass der zweiten Sprühdüse 27 ist, bei in der Ruheposition befindlichem Scheibenwischer 5 und in Bezug auf die Fahrzeugquerachse des Fahrzeuges 1, auf gegenüberliegende Bereiche der Frontscheibe 3 gerichtet. Anhand der strichliert dargestellten Dreiecke in der Figur 5 sind die Benetzungsbereiche der Frontscheibe 3 veranschaulicht, in denen die Frontscheibe 3 mittels der Sprühdüsen 25 und 27 im Bedarfsfall mit Scheibenwaschflüssigkeit besprühbar ist.

Anhand der Figur 3 ist ferner ersichtlich, dass sich die erste Versorgungsleitung 33, bei in der Ruheposition befindlichem Scheibenwischer 5 und in dem Bereich zwischen der ersten Sprühdüse 25 und dem Verbindungsteil 29, in positiver Fahrzeughochachsenrichtung über und/oder oberhalb der Wischerstange 21 erstreckt. Die zweite Versorgungsleitung 35 erstreckt sich, bei in der Ruheposition befindlichem Scheibenwischer 5 und in dem Bereich zwischen der zweiten Sprühdüse 27 und dem Verbindungsteil 29 in positiver Fahrzeughochachsenrichtung über und/oder oberhalb der Wischerstange 21.

### Bezugszeichenliste

- 1: Fahrzeug
- 3: Frontscheibe
- 5: Scheibenwischer
- 7: Scheibenwischer
- 11; 13: Dreieck
- 15: Instrumententafel
- 17: Sensormodul
- 21: Wischerstange
- 23: Wischerblatt
- 25: erste Sprühdüse
- 27: zweite Sprühdüse
- 29: Verbindungsteil
- 31: Antriebsteil
- 33: erste Versorgungsleitung
- 35: zweite Versorgungsleitung
- 41: Basisabschnitt
- 43: Verlängerungsabschnitt

- H: Hochachse der Wischerstange
- Q: Querachse der Wischerstange
- L: Längsachse der Wischerstange

- FH: Fahrzeughochachse
- FQ: Fahrzeugquerachse
- FL: Fahrzeuglängsachse
- F: Fahrer

## Patentansprüche

1. Fahrzeug mit:
einem Scheibenwischer (5; 7),
wobei der Scheibenwischer eine Wischerstange (21) und ein Wischerblatt (23) aufweist, und
wobei das Wischerblatt (23) an der Wischerstange (21) befestigt ist, **dadurch gekennzeichnet, dass** sich das Wischerblatt (23), bei in Ruheposition befindlichem Scheibenwischer (5; 7) nach fahrzeugoben über die Wischerstange (21) hinaus erstreckt.

2. Fahrzeug nach Anspruch 1, **dadurch gekennzeichnet,**
**dass** der Scheibenwischer (5; 7) Sprühdüsen (25; 27), bevorzugt zum Besprühen einer Frontscheibe (3) des Fahrzeuges (1) mit Scheibenwaschflüssigkeit, aufweist,
wobei vorgesehen ist, dass die Sprühdüsen (25; 27) derart an der Wischerstange (21) befestigt und/oder derart dimensioniert sind, dass sich das Wischerblatt (23), bei in Ruheposition befindlichem Scheibenwischer (5; 7), bevorzugt über die gesamte Länge des Wischerblattes (23), nach fahrzeugoben über die Sprühdüsen (25; 27) hinaus erstreckt, oder
wobei vorgesehen ist, dass die Sprühdüsen (25; 27) derart an der Wischerstange (21) befestigt und/oder derart dimensioniert sind, dass die Sprühdüsen (25; 27), bei in Ruheposition befindlichem Scheibenwischer (5; 7), nach fahrzeugoben bündig mit dem Wischerblatt (23) abschließen.

3. Fahrzeug nach Anspruch 1 oder 2, **dadurch gekennzeichnet,**
**dass** der Scheibenwischer (5; 7) ein Verbindungsteil (29) aufweist, und
**dass** das Wischerblatt (23) über das Verbindungsteil (29) an einem Befestigungsabschnitt der Wischerstange (21) befestigt ist.

4. Fahrzeug nach Anspruch 3, **dadurch gekennzeichnet,**
**dass** sich, bei in der Ruheposition befindlichem Scheibenwischer (5; 7), eine Wischerblattaufnahme des Verbindungsteils (29), über die das Wischerblatt (23) an dem Verbindungsteil (29) befestigt ist, fahrzeugoberhalb der Wischerstange (21) erstreckt.

5. Fahrzeug nach Anspruch 3 oder 4, **dadurch gekennzeichnet,**
**dass** sich der Befestigungsabschnitt zwischen einem Basisabschnitt (41) und einem Verlängerungsabschnitt (43) der Wischerstange (21) erstreckt, und
**dass** eine erste Sprühdüse (25) der Sprühdüsen an dem Basisabschnitt (41) und eine zweite Sprühdüse (27) der Sprühdüsen an dem Verlängerungsabschnitt (43) befestigt ist.

6. Fahrzeug nach Anspruch 5, **dadurch gekennzeichnet,**
**dass** jede der Sprühdüsen (25; 27) einen ersten Düsendurchlass mit einem ersten Düsenauslass und einen zweiten Düsendurchlass mit einem zweiten Düsenauslass aufweist,
wobei vorgesehen ist, dass der erste Düsenauslass und der zweite Düsenauslass auf eine Frontscheibe (3) des Fahrzeuges (1) gerichtet sind.

7. Fahrzeug nach Anspruch 6, **dadurch gekennzeichnet,**
**dass** der erste Düsenauslass und der zweite Düsenauslass einer jeden Sprühdüse (25; 27), in Bezug auf die Fahrzeugquerachse (FQ) des Fahrzeuges (1), auf gegenüberliegende Bereiche der Frontscheibe (3) gerichtet sind.

8. Fahrzeug nach einem der vorhergehenden Ansprüche, **dadurch gekennzeichnet, dass** das Wischerblatt (23) durch einen, bevorzugt bügellosen, Flachbalkenwischer gebildet ist.

9. Fahrzeug nach einem der Ansprüche 5 bis 8, **dadurch gekennzeichnet,**
**dass** die erste Sprühdüse (25), bevorzugt der erste Düsendurchlass der ersten Sprühdüse (25) und/oder der zweite Düsendurchlass der ersten Sprühdüse (25), über eine erste Versorgungsleitung (33), bevorzugt einen ersten Schlauch, in Strömungsverbindung mit einer Pumpe für Scheibenwaschflüssigkeit des Fahrzeuges (1) steht, und/oder
**dass** die zweite Sprühdüse (27), bevorzugt der erste Düsendurchlass der zweiten Sprühdüse (27) und/oder der zweite Düsendurchlass der zweiten Sprühdüse (27), über eine zweite Versorgungsleitung (35), bevorzugt einen zweiten Schlauch, in Strömungsverbindung mit einer Pumpe für Scheibenwaschflüssigkeit des Fahrzeuges (1) steht.

10. Scheibenwischer, bevorzugt nach einem der vorhergehenden Ansprüche, mit:
einer Wischerstange (21), und
einem Wischerblatt (23),
wobei das Wischerblatt (23) an der Wischerstange (21) befestigt ist, **dadurch gekennzeichnet,**
**dass** das Wischerblatt (23), mit Blickrichtung in positiver Hochachsenrichtung der Wischerstange (21), hinter der Wischerstange (21) angeordnet ist.
